# EUROPEAN PATENT APPLICATION

(11) **EP 4 421 716 A1**
(43) Date of publication of application: **28.08.2024**
(21) Application number: 22882650.9
(22) Date of filing: 09.10.2022
(51) Int. Cl.: G06Q 20/36

(54) **DIGITAL CURRENCY PAYMENT METHOD AND APPARATUS**

(30) Priority: 19.10.2021 CN 202111213372
(71) Applicant: Digital Currency Institute, The People's Bank of China, Beijing 100071 (CN)
(72) Inventor: DI, Gang, Beijing 100071 (CN); MU, Changchun, Beijing 100071 (CN); CUI, Peidong, Beijing 100071 (CN); ZHAO, Xinyu, Beijing 100071 (CN); YAN, Jianli, Beijing 100071 (CN); ZHANG, Hongxue, Beijing 100071 (CN)
(74) Representative: Winter, Brandl - Partnerschaft mbB
(86) International application number: PCT/CN2022/124040
(87) International publication number: WO 2023/066040

(57) **Abstract**

The provided are a digital currency payment method and apparatus, and relates to the field of computer technology. A specific implementation of the method includes: determining, by a payment device, transaction information of a current digital currency transaction based on an instruction sent by a collection device; invoking the transaction information through a local security chip, and sending the transaction information to the collection device for verification, where the transaction information includes a digital currency or identification information, and the identification information is used for identifying a wallet account or digital currency of the payment device; and updating, by the payment device, a digital currency balance after determining that the transaction information passes the verification.

## Description

### Cross-Reference to Related Application

The present application claims the priority of Chinese patent application No.202111213372.9, entitled "DIGITAL CURRENCY PAYMENT METHOD AND APPARATUS", filed on October 19, 2021, the entire content of which is incorporated herein by reference as part or all of the present application.

### Technical Field

The present disclosure relates to the field of computer technology, and in particular to a digital currency payment method and apparatus.

### Background

In the existing wallet transactions, online transfers or consumption deductions of backend accounts are carried out by the methods such as code scanning, and it is generally impossible to achieve dual-offline peer-to-peer transactions for payments and collections. In a digital currency payment system, dual-offline payments can be realized by relying on a digital currency expression, but the operation such as verification by transmitting expression information consumes a relative long time.

In the process of implementing the present disclosure, the inventor found that there are at least following problems in the prior art:
digital currency payment requirements of full scene coverage and a high transaction rate cannot be satisfied at the same time.

### Summary

In view of this, embodiments of the present disclosure provide a digital currency payment method and apparatus.

According to an aspect of an embodiment of the present disclosure, a digital currency payment method is provided.

The digital currency payment method includes: determining, by a payment device, transaction information of a current digital currency transaction based on an instruction sent by a collection device; invoking, the payment device, the transaction information through a local security chip, and sending the transaction information to the collection device for verification, wherein the transaction information includes a digital currency or identification information, and the identification information is configured to identify a wallet account or digital currency of the payment device; and updating, by the payment device, a digital currency balance after determining that the transaction information passes the verification.

According to one or more embodiments of the present disclosure, the determining, a payment device, transaction information of a current digital currency transaction based on an instruction sent by a collection device includes: based on the instruction sent by the collection device, determining, by the payment device, the transaction information of the current digital currency transaction according to a preset corresponding relationship between an instruction and a transaction information type, wherein the instruction sent by the collection device is related to network status and/or device forms of the payment device and the collection device.

According to one or more embodiments of the present disclosure, in a case that the collection device is a device with a networking capability in device form and is in an online network status, the transaction information includes one of a wallet account identifier, a digital currency identifier, and a digital currency; the obtaining, by the payment device, the transaction information through a local security chip includes: obtaining, by the payment device, one of the wallet account identifier, the digital currency identifier, and the digital currency from the local security chip so as to generate the transaction information.

According to one or more embodiments of the present disclosure, before determines, by a payment device, transaction information of a current digital currency transaction based on an instruction sent by a collection device, the method includes: obtaining, by the payment device, the digital currency issued by an operating institution backend system of the digital currency during the recharge operation, and storing the corresponding digital currency identifier in the local security chip.

According to one or more embodiments of the present disclosure, in a case that the transaction information is generated based on the digital currency identifier, updating, by the payment device, a digital currency balance after determining that the transaction information passes the verification includes: after the payment device determines that the transaction information passes the verification, performing, by the operating institution backend system of the digital currency, a deduction operation, and updating, by the payment device, a local digital currency balance after receiving a deduction completing instruction returned by the operating institution backend system.

According to one or more embodiments of the present disclosure, in a case that the payment device is a device with a networking capability in device form, the wallet account identifier is one of a parent wallet account identifier, an another online wallet account identifier, and a local wallet account identifier of the payment device. In a case that the payment device is a device without a networking capability in device form, the wallet account identifier is the local wallet account identifier of the payment device.

According to one or more embodiments of the present disclosure, before determining, by a payment device, transaction information of a current digital currency transaction based on an instruction sent by a collection device, the method includes: receiving, by the payment device, the wallet account identifier issued by the operating institution backend system of the digital currency during the creation of a wallet account, and storing the wallet account identifier in the local security chip; in a case that the wallet account identifier is the local wallet account identifier, when the payment device performs a recharge operation, recording, by the operating institution backend system, a mapping relationship between the digital currency for recharge and the local wallet account identifier.

According to one or more embodiments of the present disclosure, in the case that the transaction information is generated based on the local wallet account identifier, the updating, by the payment device, a digital currency balance after determining that the transaction information passes the verification includes: after the payment device determines that the transaction information passes the verification, performing, by the operating institution backend system, a deduction operation, and updating, by the payment device, the digital currency balance of the local wallet account based on a deduction completing instruction returned by the operating institution backend system.

According to one or more embodiments of the present disclosure, in a case that the transaction information is generated based on the parent wallet account identifier or another online wallet account identifier, the updating, by the payment device, a digital currency balance after determining that the transaction information passes the verification includes: after the payment device determines that the transaction information passes the verification, performing, by the operating institution backend system, a deduction operation, updating the digital currency balance in a corresponding parent wallet application or online wallet application without updating the digital currency balance of the local wallet account.

According to one or more embodiments of the present disclosure, in a case that the collection device is a device without a networking capability in device form, or the collection device is a device with a networking capability in device form but is in an offline network status, the transaction information includes the digital currency. The obtaining, by the payment device, the transaction information through a local security chip includes: obtaining, by the payment device, the digital currency from the local security chip so as to generate the transaction information.

According to one or more embodiments of the present disclosure, in a case that the transaction information is generated based on the digital currency, the updating, by the payment device, a digital currency balance after determining that the transaction information passes the verification includes: updating, by the payment device, the local digital currency balance after determining that the transaction information passes the verification.

According to another aspect of an embodiment of the present disclosure, a digital currency payment apparatus is provided.

The digital currency payment apparatus is located in a payment device. The apparatus includes: a transaction information determination module, configured to determine transaction information of a current digital currency transaction based on an instruction sent by a collection device; a security chip storage module, configured to invoke, by a local security chip, the transaction information, and send the transaction information to the collection device for verification, wherein the transaction information includes a digital currency or identification information, and the identification information is configured to identify a wallet account or digital currency of the payment device; and a balance update module, configured to update a digital currency balance after determining that the transaction information passes the verification.

According to another aspect of an embodiment of the present disclosure, an electronic device is provided.

The electronic device includes: one or more processors; and a memory configured to store one or more programs. The one or more programs, when executed by the one or more processors, enable the one or more processors to implement the digital currency payment method provided in this embodiment of the present disclosure.

According to another aspect of an embodiment of the present disclosure, a computer-readable medium is provided.

The computer-readable medium stores a computer program. The program, when executed by a processor, implements the digital currency payment method provided in this embodiment of the present disclosure.

Further effects of the foregoing non-conventional optional methods will be described below in conjunction with specific implementations.

### Brief Description of the Drawings

The accompanying drawings are used for a better understanding of the present disclosure, which do not constitute improper limitations on the present disclosure.
Fig. 1 is a schematic diagram of main steps of a digital currency payment method according to an embodiment of the present disclosure;
Fig. 2 is a schematic diagram of a digital currency payment process according to an embodiment of the present disclosure;
Fig. 3 is a schematic diagram of a balance status of a networked mobile phone terminal according to an embodiment of the present disclosure;
Fig. 4 is a schematic diagram of a balance status of a networked mobile phone terminal according to another embodiment of the present disclosure;
Fig. 5 is a schematic diagram of a non-networked balance status of an IC card according to an embodiment of the present disclosure;
Fig. 6 is a schematic diagram of main modules of a digital currency payment apparatus according to an embodiment of the present disclosure;
Fig. 7 is a diagram of an exemplary system architecture to which the embodiments of the present disclosure can be applied; and
Fig. 8 is a structural schematic diagram of a computer system suitable for implementing a terminal device according to an embodiment of the present disclosure.

### Detailed Description of the Embodiments

Exemplary embodiments of the present disclosure are described in conjunction with the accompanying drawings below, which include various details of the embodiments of the present disclosure to facilitate understanding, and should be considered as exemplary only. Therefore, those of ordinary skill in the art should realize that the embodiments described herein can be variously transformed and modified without departing from the scope and spirit of the present disclosure. Similarly, for clarity and brevity, descriptions of well-known functions and structures are omitted in the following descriptions.

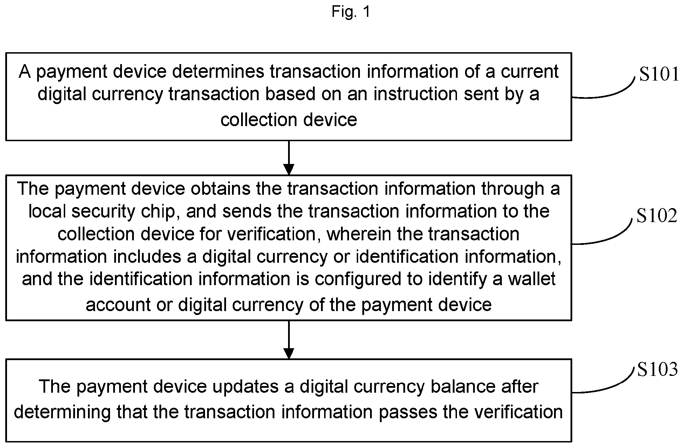

Fig. 1 is a schematic diagram of main steps of a digital currency payment method according to an embodiment of the present disclosure.

As shown in Fig. 1, a digital currency payment method according to an embodiment of the present disclosure mainly includes step S101 to step S103 below.

Step S101: A payment device determines transaction information of a current digital currency transaction based on an instruction sent by a collection device.

Step S102: The payment device obtains the transaction information through a local security chip, and sends the transaction information to the collection device for verification, wherein the transaction information includes a digital currency or identification information, and the identification information is configured to identify a wallet account or a digital currency of the payment device.

Step S103: The payment device updates a digital currency balance after determining that the transaction information passes the verification.

The digital currency transaction refers to the payment of the digital currency, and the instruction sent by the collection device is configured to initiate the payment process.

Based on the type of identification information, the identification information configured to identify the wallet account of the payment device is called a wallet account identifier, and the identification information configured to identify the digital currency in the payment device is called a digital currency identifier.

The step that a payment device determines transaction information of a current digital currency transaction based on an instruction sent by a collection device specifically includes: the payment device determines, based on the instruction sent by the collection device, the transaction information of the current digital currency transaction according to a preset corresponding relationship between an instruction and a transaction information type. The instruction sent by the collection device is related to the network status and/or device forms of the payment device and the collection device.

In a case that the collection device is a device with a networking capability in device form and is in an online network status, for example, the collection device is a mobile phone terminal in an online status, the transaction information includes one of a wallet account identifier, a digital currency identifier, and a digital currency. Online refers to a network connection between the collection device and an operating institution backend system of the digital currency has been established.

The step that the payment device obtains the transaction information through a local security chip specifically includes: the payment device obtains one of the wallet account identifier, the digital currency identifier, and the digital currency from the local security chip so as to generate the transaction information.

In an embodiment, before a payment device determines transaction information of a current digital currency transaction based on an instruction sent by a collection device, the payment device may obtain a digital currency issued by an operating institution backend system of the digital currency (i.e., operating institution backend) during the recharge operation, and store a corresponding digital currency identifier in a local security chip.

In a case that the transaction information is generated based on the digital currency identifier, the step that the payment device updates a digital currency balance after determining that the transaction information passes the verification includes: after the payment device determines that the transaction information passes the verification, the operating institution backend system of the digital currency performs a deduction operation, and the payment device updates the local digital currency balance after receiving a deduction completing instruction returned by the operating institution backend system.

In a case that the payment device is a device with a networking capability in device form, the wallet account identifier is one of a parent wallet account identifier, an another online wallet account identifier, and a local wallet account identifier of the payment device.

In a case that the payment device is a device without a networking capability in device form, for example, the payment device is an IC card, the wallet account identifier is the local wallet account identifier of the payment device.

In an embodiment, before a payment device determines transaction information of a current digital currency transaction based on an instruction sent by a collection device, the payment device may receive a wallet account identifier issued by the operating institution backend system of the digital currency during the creation of a wallet account, and stores the wallet account identifier in the local security chip. In the case that the wallet account identifier is the local wallet account identifier, when the payment device performs a recharge operation, the operating institution backend system records a mapping relationship between the digital currency for recharge and the local wallet account identifier.

In the case that the transaction information is generated based on the local wallet account identifier, the step that the payment device updates a digital currency balance after determining that the transaction information passes the verification includes: after the payment device determines that the transaction information passes the verification, the operating institution backend system performs a deduction operation, and the payment device updates the digital currency balance of the local wallet account based on the deduction completing instruction returned by the operating institution backend system.

In the case that the transaction information is generated based on the parent wallet account identifier or another online wallet account identifier, the step that the payment device updates a digital currency balance after determining that the transaction information passes the verification specifically includes: after the payment device determines that the transaction information passes the verification, the operating institution backend system performs a deduction operation, the digital currency balance is updated in a corresponding parent wallet application or online wallet application, and the digital currency balance of the local wallet account is not updated.

In the case that the collection device is a device without a networking capability in device form, or the collection device is a device with a networking capability in form but is in an offline network status, the transaction information includes a digital currency, namely a digital currency string.

The step that the payment device obtains the transaction information through a local security chip includes: the payment device obtains the digital currency from the local security chip so as to generate the transaction information.

In the case that the transaction information is generated based on the digital currency, the step that the payment device updates a digital currency balance after determining that the transaction information passes the verification includes: the payment device updates the local digital currency balance after determining that the transaction information passes the verification.

The payment device in this embodiment of the present disclosure uses the local security chip to store the transaction information including two types: the digital currency and the identification information, and supports the dual-offline payments and single-offline payments with a higher transaction rate. The payment device decides to transmit the digital currency or the identification information based on the instruction sent by the collection device, and initiates the dual-offline payment or the single-offline payment. The identification information may be configured to identify a parent wallet account, an another online wallet account, local wallet accounts, and local digital currencies. Different identifiers correspond to different user experiences. Moreover, based on different terminal forms, different networking capabilities, and different identified accounts, a storage mechanism for the local account balance varies. For example, for payment devices such as the mobile phone terminal, the online wallet account balance and the local balance may coexist and be maintained separately. However, for payment devices such as an IC card terminal, during transmission of the digital currency or identification information, a unified local balance may be maintained. According to this embodiment of the present disclosure, the transaction may be performed by replying on the local digital currency or an institution backend account system. Link mapping between the identification information and the wallet account may also be customized based on businesses, and strong scalability is achieved.

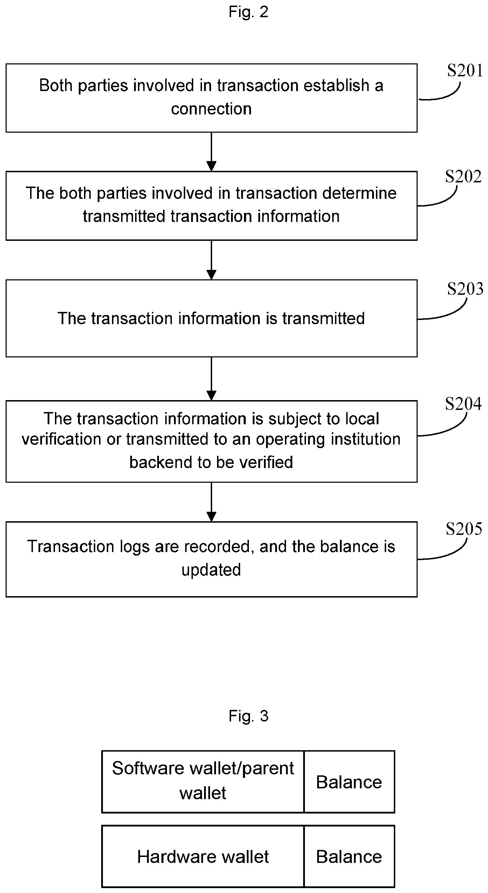

Fig. 2 is a schematic diagram of a digital currency payment process according to an embodiment of the present disclosure. As shown in Fig. 2, the process includes:
Step S201: Both parties involved in transaction establish a connection.

The both parties involved in transaction refer to a payer and a payee. The payer is a payment device, such as a payment terminal, and the payee is a collection device, such as a collection terminal. The payer and the payee may establish a connection through respective short-range communication modules. The short-range communication modules are configured to establish a payment channel between the both parties and transmit transaction information such as certificates. The communication methods may include near field communication (NFC), Bluetooth communication, wireless local area network (WLAN) direct, ultra wide band (UWB), etc.

Both the parties involved in transaction are respectively provided with security chip storage modules. The security chip storage module is mainly configured to store transaction sensitive information, including a digital currency and further including identification information of an operating institution backend for identifying an account or digital currency, transaction logs, wallet balances, etc. Based on different terminal forms, the identification information may identify a local wallet, and a local digital currency, and may also identify an online wallet of the user.

There may be three methods for performing transaction information storage on the security chip and establishing the association relationship of the operating institution backend in this embodiment of the present disclosure. According to a first method, when a payer user opens a digital currency wallet, the operating institution backend saves user information and issues identification information to a local security chip of the payer. The identification information identifies a local wallet account and is called a local wallet account identifier. When the user recharges, the operating institution backend issues a digital currency to the local security chip of the payer, and meanwhile records a mapping relationship between the identification information (local wallet account identifier) and the digital currency. According to a second method, when a payer user opens a digital currency wallet, the operating institution backend saves user information and issues identification information to a local security chip of the payer, and the identification information identifies a parent wallet of the user, called a parent wallet account identifier. Alternatively, the identification information identifies an another online wallet account of the user, called an another online wallet account identifier, and subsequent local digital currency recharge performed by the user is unrelated to the identification information. According to a third method, when the user recharges, the operating institution backend issues a digital currency and meanwhile records information of the digital currency, and when the user subsequently transmits information such as a serial number, the operating institution backend updates a backend account.

There may be two methods for the both parties involved in transaction to establish a communication connection and initiate a transaction. Firstly, when the payee is online (i.e., in a case that the collection device is a device with a networking capability in device form and is in an online network status), the payer transmits identification information or a digital currency to the payee, the identification information may be a local wallet identifier, an online wallet identifier, or a digital currency identifier, and the payee transmits the identification information to the payer operating institution backend for verification. Secondly, when the payee is offline (i.e., in the case that the collection device is a device without a networking capability in device form, or the collection device is a device with a networking capability in form, but is in an offline network status), the payer transmits the digital currency to the payee, and the payee performs local verification. Digital currency transmission refers to digital currency string transmission.

Step S202: The both parties involved in transaction determine transmitted transaction information.

The both parties involved in transaction may determine the transmitted transaction information type based on the network status and the terminal form of the both parties. For example, after the payee receives an inputted payment amount, the payee determines an instruction required to be sent to the payer based on the network status and the terminal form (i.e., device form) of the both parties, and then sends the instruction to the payer. The payer presets a preset corresponding relationship between the instruction and the transaction information type, such that the payer may determine, based on specific content in the instruction of the payee, that the corresponding transaction information in the security chip storage module needs to be transmitted in the current payment.

Step S203: The transaction information is transmitted.

The security chip storage module may invoke the transaction information through the local security chip, and then transmit the transaction information. The payer may invoke, based on an instruction sent by the payer, the transaction information through the local security chip, and send the transaction information to the payee.

Step S204: The transaction information is subject to local verification or transmitted to the operating institution backend to be verified.

As at least one alternative embodiment, the payee may determine, based on the transaction information type, whether to perform the local verification or perform transmission to the corresponding operating institution backend for verification. For example, if the payer sends a digital currency, the local verification may be performed by the payee. If the payer sends a parent wallet account identifier, the parent wallet account identifier may be transmitted to the corresponding operating institution backend to be verified.

The payee may establish a connection with the operating institution backend through a terminal communication module, and the terminal communication module is configured to transmit the transaction information to the operating institution backend.

An institution backend transaction module of the operating institution backend records a mapping relationship between identification information and a user wallet/digital currency, verifies legitimacy of the user transaction information, and records a user transaction status, balance information, etc. corresponding to the identification information.

Step S205: Transaction logs are recorded, and the balance is updated.

After receiving a return result that the payer verification succeeds, the payer records the transaction log, and updates the digital currency balance.

There may be four methods for initiating a deduction and updating the balance in the case of the successful transaction information verification. According to a first method, if the identification information is a local wallet account identifier of the payer, the operating institution backend performs the deduction, and the payer receives the deduction completing instruction and updates the local wallet balance. According to a second method, if the identification information is a parent wallet account identifier or an another online wallet account identifier of the payer, the operating institution backend performs the corresponding account deduction, a parent wallet or an another online wallet receives a deduction notification within the application or through a short message, and the local account balance of the payer is not updated. According to a third method, if the identification information is a digital currency identifier of a local wallet of the payer, such as a digital currency serial number or an another identifier of the digital currency, the operating institution backend performs the deduction, and the payer receives the deduction completing instruction and updates the local wallet balance. According to a fourth method, the payer transmits a digital currency (currency string itself) to the payee, and after the payee verification succeeds, the payer receives a successful verification instruction returned by the payee, and the payer updates the local digital currency balance.

According to this embodiment of the present disclosure, the payer stores the digital currency and the identification information. Different types of transaction information are transmitted according to the instruction of the payee. The instruction of the payee is related to the network status and the terminal form of the terminal, and the dual-offline payment or single-offline payment is achieved through verification by a terminal side (terminal) or the operating institution backend. This embodiment of the present disclosure may be used for payment devices with a networking capability and payment devices without a networking capability, and can identify different wallets, parent-child wallets, or single wallets.

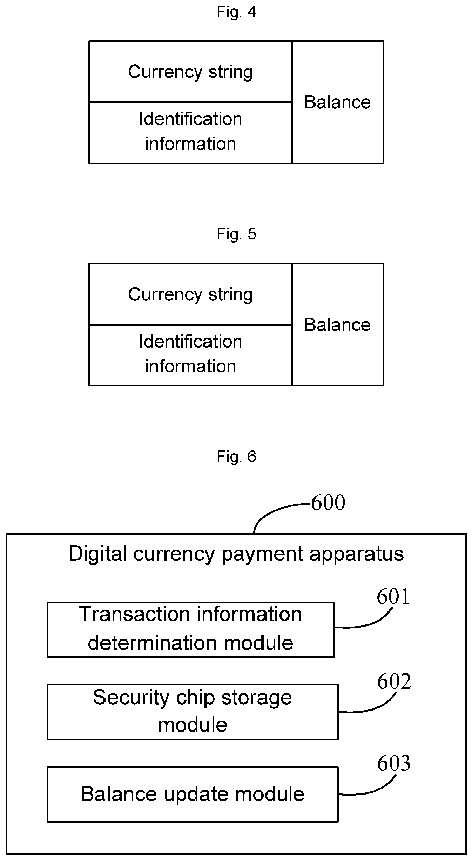

Fig. 3 to Fig. 5 illustrate balance statuses of payment devices according to embodiments of the present disclosure. Fig. 3 is a schematic diagram of a balance status of a networked mobile phone terminal according to an embodiment of the present disclosure. Fig. 4 is a schematic diagram of a balance status of a networked mobile phone terminal according to another embodiment of the present disclosure. Fig. 5 is a schematic diagram of a non-networked balance status of an IC card according to an embodiment of the present disclosure. According to Fig. 3, in the case that the payment device according to this embodiment of the present disclosure is a device with a networking capability such as a mobile phone terminal, a digital currency wallet may include a software wallet/parent wallet (i.e., an online wallet) and a hardware wallet (i.e., a local wallet). Correspondingly, the balance may include the balance of the software wallet/parent wallet (i.e., the online wallet) and the balance of the hardware wallet (i.e., the local wallet). According to Fig. 4, in the case that the payment device according to this embodiment of the present disclosure is a device with a networking capability such as a mobile phone, the payment device may locally store identification information and a digital currency string, and the balance is a local digital currency balance. According to Fig. 5, in the case that the payment device according to this embodiment of the present disclosure is a device without a networking capability such as an IC card, the payment device may locally store identification information and a digital currency string, and the balance is a local digital currency balance.

When the method and system according to this embodiment of the present disclosure are applied to a digital currency wallet with a networking capability such as a mobile phone terminal, the user can perform an off-screen payment. Particularly, in a parent-child wallet system, when the payee is online, a transaction identifier of a parent wallet may be transmitted to perform a wallet parent account payment; and when the payee is offline, transmission of a digital currency is supported to perform a local wallet payment.

When this embodiment of the present disclosure is applied to a digital currency wallet without a networking capability such as an IC card and a visual IC card, when the payee is online, identification information (an account identifier of a local wallet) or a digital currency serial number of a local account may be transmitted to perform a local wallet payment. When the payee is offline, transmission of a digital currency (i.e., a digital currency string) is supported to perform a local wallet payment. Dual-offline and single-offline operations are supported, and the security chip maintains unified updates of the balance. According to this embodiment of the present disclosure, the transaction rate is greatly increased in the case that the both parties involved in transaction are online. The dual-offline transaction can be performed by transmitting the digital currency in the case that the both parties are offline, and therefore the transaction scalability and coverage are improved.

During applied to a networked device such as a mobile phone terminal, if the payment is performed by using identification information of the parent wallet, a deduction notification is received through a parent wallet App or a short message, and the local balance is not updated. During applied to a non-networked device such as the IC card, the local wallet identification information, the serial number (digital currency identifier), and the digital currency are used for the payment, and the local balance is updated uniformly, so as to effectively solve the problem of inconsistency in account display. The user can combine the dual-offline transaction and single-offline transaction of the digital currency without touch. During the single-offline transaction, the transaction rate is greatly increased, and the user experience is effectively improved.

Fig. 6 is a schematic diagram of main modules of a digital currency payment apparatus according to an embodiment of the present disclosure. As shown in Fig. 6, a digital currency payment apparatus 600 according to an embodiment of the present disclosure is located in a payment device, and mainly includes: a transaction information determination module 601, a security chip storage module 602, and a balance update module 603.

The transaction information determination module 601 is configured to determine transaction information of a current digital currency transaction based on an instruction sent by a collection device.

The security chip storage module 602 is configured to invoke, by a local security chip, the transaction information, and send the transaction information to the collection device for verification, wherein the transaction information includes a digital currency or identification information, and the identification information is configured to identify a wallet account or digital currency of the payment device.

The balance update module 603 is configured to update a digital currency balance after determining that the transaction information passes the verification.

The transaction information determination module 601 may be configured to: determine, based on the instruction sent by the collection device, the transaction information of the current digital currency transaction according to a preset corresponding relationship between an instruction and a transaction information type. The instruction sent by the collection device is related to the network status and/or device forms of the payment device and the collection device.

In a case that the collection device is a device with a networking capability in device form and is in an online network status, the transaction information includes one of a wallet account identifier, a digital currency identifier, and a digital currency. The security chip storage module 602 is configured to obtain one of the wallet account identifier, the digital currency identifier, and the digital currency from the local security chip so as to generate the transaction information.

The security chip storage module 602 is further configured to: obtain a digital currency issued by an operating institution backend system of the digital currency during a recharge operation by the payment device, and store a corresponding digital currency identifier in the local security chip.

In a case that the transaction information is generated based on the digital currency identifier, the balance update module is further configured to: perform, by the operating institution backend system of the digital currency, a deduction operation after the payment device determines that the transaction information passes the verification, and update the local digital currency balance after the payment device receives a deduction completing instruction returned by the operating institution backend system.

In a case that the payment device is a device with a networking capability in device form, the wallet account identifier is one of a parent wallet account identifier, an another online wallet account identifier, and a local wallet account identifier of the payment device. In a case that the payment device is a device without a networking capability in device form, the wallet account identifier is the local wallet account identifier of the payment device.

The security chip storage module 602 is further configured to: receive a wallet account identifier issued by the operating institution backend system of the digital currency during the creation of a wallet account by the payment device, and store the wallet account identifier in the local security chip. In the case that the wallet account identifier is the local wallet account identifier, when the payment device performs a recharge operation, the operating institution backend system records a mapping relationship between the digital currency for recharge and the local wallet account identifier.

In the case that the transaction information is generated based on the local wallet account identifier, the balance update module 603 is further configured to: perform, by the operating institution backend system, a deduction operation after determining that the transaction information passes the verification, and update the digital currency balance of the local wallet account based on the deduction completing instruction returned by the operating institution backend system.

In the case that the transaction information is generated based on the parent wallet account identifier or another online wallet account identifier, the balance update module 603 is further configured to: perform, by the operating institution backend system, a deduction operation after determining that the transaction information passes the verification, and update the digital currency balance in a corresponding parent wallet application or online wallet application without updating the digital currency balance of the local wallet account.

In the case that the collection device is a device without a networking capability in device form, or the collection device is a device with a networking capability in form but is in an offline network status, the transaction information includes a digital currency. The security chip storage module 602 is further configured to: obtain, by the payment device, a digital currency from the local security chip so as to generate transaction information.

In the case of generating transaction information based on the digital currency, the balance update module is further configured to update a local digital currency balance after determining that the transaction information passes the verification.

According to this embodiment of the present disclosure, when the payee is offline, after identity verification of the both parties, a digital currency expression is transmitted, and the verification is successful, thereby achieving the dual-offline payment. Meanwhile, a transaction log is recorded in the security chip, and the digital currency balance is updated. When the payee is online, the payer transmits transaction information mapped at the backend, and verification is performed through a symmetric key of the security chip and the institution backend. After the verification is successful, a deduction on a backend mapped account is performed, meanwhile, the security chip records a transaction log, and the digital currency balance is updated. The solution greatly improves coverage of the digital currency payment, effectively shortens the transaction time, and ensures validness of the balance.

In addition, the specific implementation content of the digital currency payment apparatus in this embodiment of the present disclosure is described in detail in the above digital currency payment method, and therefore the repeated content is not described any more.

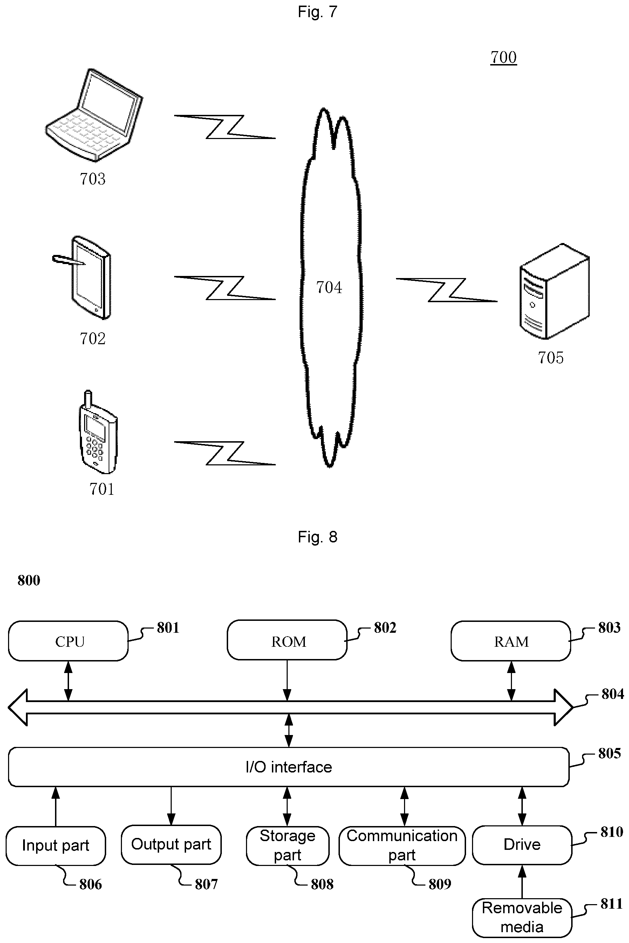

Fig. 7 illustrates an exemplary system architecture 700 that can apply a digital currency payment method or digital currency payment apparatus according to an embodiment of the present disclosure.

As shown in Fig. 7, the system architecture 700 may include terminal devices 701, 702, and 703, a network 704, and a server 705. The network 704 is a medium configured to provide a communication link between the terminal devices 701, 702, and 703 and the server 705. The network 704 may have various connection types, such as wired and wireless communication links, or fiber optic cables.

The user may use the terminal devices 701, 702, and 703 to interact with the server 705 through the network 704 to receive or send messages, etc. The terminal devices 701, 702, and 703 may be provided with various communication client applications, such as shopping applications, web browser applications, search applications, instant messaging tools, email clients, and social platform software (for illustrative purposes only).

The terminal devices 701, 702 and 703 may be various electronic devices having display screens and supporting web browsing, which include but not limited to a smart phone, a tablet personal computer, a portable laptop, a desk computer, etc.

The server 705 may be a server that provides various services, such as a backend management server (for illustrative purposes only) that supports shopping websites browsed by users using the terminal devices 701, 702, and 703. The backend management server can perform analysis and other processing on received data such as transaction information and feed a processing result (e.g., a transaction result for illustrative purposes only) back to the terminal devices.

It should be noted that the digital currency payment method provided in this embodiment of the present disclosure is typically executed by the terminal devices 701, 702, and 703. Correspondingly, the digital currency payment apparatus is typically arranged in the terminal devices 701, 702, and 703.

It should be understood that the number of the terminal devices, networks and servers in Fig. 7 is for an illustrative purpose only. According to implementation needs, there may be any number of terminal devices, networks and servers.

Referring to Fig. 8 below, Fig. 8 illustrates a structural schematic diagram of a computer system 800 suitable for implementing a terminal device according to an embodiment of the present disclosure. The terminal device shown in Fig. 8 is merely an example, which should not impose any limitations on functions and application ranges of this embodiment of the present disclosure.

As shown in Fig. 8, the computer system 800 includes a central processing unit (CPU) 801 which may perform various proper actions and processing according to programs stored in a read only memory (ROM) 802 or programs loaded from a storage part 808 to a random access memory (RAM) 803. Various programs and data required for the operation of the system 800 are further stored in the RAM 803. The CPU 801, the ROM 802, and the RAM 803 are connected with one another through a bus 804. An input/output (I/O) interface 805 is also connected to the bus 804.

Following components are connected to the I/O interface 805: an input part 806 including a keyboard, a mouse, etc.; an output part 807 including a cathode ray tube (CRT), a liquid crystal display (LCD), etc., and a speaker, etc.; the storage part 808 including a hard drive, etc.; and a communication part 809 including a network interface card such as a local area network (LAN) card and a modem. The communication part 809 performs communication processing through networks such as the Internet. A drive 810 is also connected to the I/O interface 805 as needed. Removable media 811, such as a magnetic disk, an optical disk, a magneto-optical disk, and a semiconductor memory can be installed on the drive 810 as needed, so that computer programs read therefrom are installed in the storage part 808 as needed.

Particularly, the foregoing process described with reference to the flowchart according to the embodiments of the present disclosure may be implemented as a computer software program. For example, an embodiment of the present disclosure includes a computer program product including a computer program stored on a computer-readable medium. The computer program includes program code for executing the method shown in the flowchart. In this embodiment, the computer program can be downloaded and installed from the network by the communication part 809, and/or be installed from the removable media 811. The computer program, when executed by the central processing unit (CPU) 801, executes the foregoing functions limited in the system of the present disclosure.

It should be noted that the computer-readable medium shown in the present disclosure may be a computer-readable signal medium, or a computer-readable storage medium, or any combination thereof. For example, the computer-readable storage medium may include but not limited to: electrical, magnetic, optical, electromagnetic, infrared, or semiconductor systems, apparatuses or devices, or any combination thereof. More specific examples of the computer-readable storage medium may include but not limited to: an electrical connection with one or more wires, a portable computer disk, a hard drive, a random access memory (RAM), a read only memory (ROM), an erasable programmable read only memory (EPROM or flash memory), fiber optics, a portable compact disc read only memory (CD-ROM), an optical storage device, a magnetic storage device, or any proper combination of the above. In the present disclosure, the computer-readable storage medium may be any tangible medium including or storing a program, and the program may be used by an instruction execution system, apparatus or device, or used in conjunction with the instruction execution system, apparatus or device. However, in the present disclosure, the computer-readable signal medium may include data signals propagated in a baseband or propagated as a part of a carrier wave, which carry computer-readable program code. The propagated data signals may have a plurality of forms, including but not limited to electromagnetic signals, optical signals, or any proper combination of the above. The computer-readable signal medium may be any computer-readable medium except the computer-readable storage medium. The computer-readable medium may send, propagate, or transmit programs used by the instruction execution system, apparatus, or device or used in conjunction with the instruction execution system, apparatus, or device. The program code included in the computer-readable medium may be transmitted by any proper medium, including but not limited to wireless, a wire, an optical cable, radio frequency (RF), etc., or any above proper combination of the above.

The flowcharts and block diagrams in the accompanying drawings illustrate system architectures, functions, and operations possibly implemented by the system, method and computer program product according to the various embodiments of the present disclosure. In this regard, each block in the flowcharts or block diagrams may represent a module, a program segment, or part of the code, and the module, program segment, or part of the code includes one or more executable instructions for implementing specified logical functions. It should be noted that in some alternative implementations, functions marked in the blocks may also occur in an order different from that marked in the accompanying drawings. For example, two consecutively-shown blocks may actually be executed in parallel basically, but sometimes may also be executed in a reverse order, which depends on involved functions. It should be further noted that each block in the block diagrams or the flowcharts as well as a combination of the blocks in the block diagrams or the flowcharts may be implemented by using a dedicated hardware-based system that executes specified functions or operations, or using a combination of special hardware and computer instructions.

The modules described in the embodiments of the present disclosure may be implemented through software or hardware. The described modules may also be arranged in a processor. For example, it may be described as: a processor includes a transaction information determination module, a security chip storage module, and a balance update module. The names of these modules do not limit the modules in some cases. For example, the transaction information determination module may also be described as "a module configured to determine transaction information of a current digital currency transaction based on an instruction sent by a collection device".

According to another aspect, the present disclosure further provides a computer-readable medium. The computer-readable medium may be included in the device described in the foregoing embodiment, and may also separately exist without being assembled in the device. The computer-readable medium carries one or more programs. When the one or more programs are executed by the device, the device is made to include: a payment device determines transaction information of a current digital currency transaction based on an instruction sent by a collection device; the payment device obtains the transaction information through a local security chip, and sends the transaction information to the collection device for verification, wherein the transaction information includes a digital currency or identification information, and the identification information is configured to identify a wallet account or digital currency of the payment device; and the payment device updates a digital currency balance after determining that the transaction information passes the verification.

According to the technical solution of this embodiment of the present disclosure, the payment device determines the transaction information of the current digital currency transaction based on the instruction sent by the collection device, and the transaction information is obtained through the local security chip and sent to the collection device to be verified, wherein the transaction information includes the digital currency or identification information, and the identification information is configured to identify the wallet account or digital currency of the payment device; and the payment device updates the digital currency balance after determining that the transaction information passes the verification. The dual-offline transaction can be supported, the requirement for wide scene coverage is satisfied, consumed time is short, and the transaction rate is high in the case of networking.

The foregoing specific implementations do not limit the scope of protection of the present disclosure. Those skilled in the art should understand that various modifications, combinations, sub-combinations, and substitutions may occur based on design demands and other factors. Any modification, equivalent replacement, improvement, etc., made within the spirit and principle of the present disclosure shall fall within the scope of protection of the present disclosure.

## Claims

1. A digital currency payment method, comprising:
determining, by a payment device, transaction information of a current digital currency transaction based on an instruction sent by a collection device;
obtaining, by the payment device, the transaction information through a local security chip, and sending the transaction information to the collection device for verification, wherein the transaction information comprises a digital currency or identification information, and the identification information is configured to identify a wallet account or a digital currency of the payment device; and
updating, by the payment device, a digital currency balance after determining that the transaction information passes the verification.

2. The method as claimed in claim 1, wherein the determining, by a payment device, transaction information of a current digital currency transaction based on an instruction sent by a collection device comprises:
based on the instruction sent by the collection device, determining, by the payment device, the transaction information of the current digital currency transaction according to a preset corresponding relationship between an instruction and a transaction information type, wherein the instruction sent by the collection device is related to network status and/or device forms of the payment device and the collection device.

3. The method as claimed in claim 2, wherein in a case that the collection device is a device with a networking capability in device form and is in an online network status, the transaction information comprises one of a wallet account identifier, a digital currency identifier, and a digital currency; and
the obtaining, by the payment device, the transaction information through a local security chip comprises:
obtaining, by the payment device, one of the wallet account identifier, the digital currency identifier, and the digital currency from the local security chip so as to generate the transaction information.

4. The method as claimed in claim 3, wherein before the determining, by a payment device, transaction information of a current digital currency transaction based on an instruction sent by a collection device, the method comprises:
obtaining, by the payment device, the digital currency issued by an operating institution backend system of the digital currency during a recharge operation, and storing a corresponding digital currency identifier in the local security chip.

5. The method as claimed in claim 3 or 4, wherein in a case that the transaction information is generated based on the digital currency identifier, the updating, by the payment device, a digital currency balance after determining that the transaction information passes the verification comprises:
performing, by the operating institution backend system of the digital currency, a deduction operation after the payment device determines that the transaction information passes the verification, and updating, by the payment device, a local digital currency balance after receiving a deduction completing instruction returned by the operating institution backend system.

6. The method as claimed in claim 3, wherein in a case that the payment device is a device with a networking capability in device form, the wallet account identifier is one of a parent wallet account identifier, an another online wallet account identifier, and a local wallet account identifier of the payment device; and in a case that the payment device is a device without a networking capability in device form, the wallet account identifier is the local wallet account identifier of the payment device.

7. The method as claimed in claim 6, wherein before the determining, by a payment device, transaction information of a current digital currency transaction based on an instruction sent by a collection device, the method comprises:
receiving, by the payment device, the wallet account identifier issued by the operating institution backend system of the digital currency during a creation of a wallet account, and storing the wallet account identifier in the local security chip, and in a case that the wallet account identifier is the local wallet account identifier, recording, by the operating institution backend system, a mapping relationship between the digital currency for recharge and the local wallet account identifier when the payment device performs a recharge operation.

8. The method as claimed in claim 7, wherein in a case that the transaction information is generated based on the local wallet account identifier, the updating, by the payment device, a digital currency balance after determining that the transaction information passes the verification comprises:
after the payment device determines that the transaction information passes the verification, performing, by the operating institution backend system, a deduction operation, and updating, by the payment device, the digital currency balance of the local wallet account based on a deduction completing instruction returned by the operating institution backend system.

9. The method as claimed in claim 6 or 7, wherein in a case that the transaction information is generated based on the parent wallet account identifier or another online wallet account identifier, the updating, by the payment device, a digital currency balance after determining that the transaction information passes the verification comprises:
after the payment device determines that the transaction information passes the verification, performing, by the operating institution backend system, a deduction operation, updating the digital currency balance in a corresponding parent wallet application or online wallet application without updating the digital currency balance of the local wallet account.

10. The method as claimed in claim 2, wherein in a case that the collection device is a device without a networking capability in device form, or the collection device is a device with a networking capability in device form but is in an offline network status, the transaction information comprises the digital currency; and
the obtaining, by the payment device, the transaction information through a local security chip comprises:
obtaining, by the payment device, the digital currency from the local security chip so as to generate the transaction information.

11. The method as claimed in claim 10, wherein in a case that the transaction information is generated based on the digital currency, the updating, by the payment device, a digital currency balance after determining that the transaction information passes the verification comprises:
updating, by the payment device, the local digital currency balance after determining that the transaction information passes the verification.

12. A digital currency payment apparatus, located in a payment device, the apparatus comprising:
a transaction information determination module, configured to determine transaction information of a current digital currency transaction based on an instruction sent by a collection device;
a security chip storage module, configured to invoke, by a local security chip, the transaction information, and send the transaction information to the collection device for verification, wherein the transaction information comprises a digital currency or identification information, and the identification information is configured to identify a wallet account or a digital currency of the payment device; and
a balance update module, configured to update a digital currency balance after determining that the transaction information passes the verification.

13. An electronic device, comprising:
one or more processors; and
a memory configured to store one or more programs,
wherein when the one or more programs are executed by the one or more processors, the one or more processors implement the method as claimed in any one of claims 1 to 11.

14. A computer-readable medium, storing a computer program, wherein the computer program, when executed by a processor, implements the method as claimed in any one of claims 1 to 11.
